# EUROPEAN PATENT APPLICATION

(11) **EP 4 528 951 A1**
(43) Date of publication of application: **26.03.2025**
(21) Application number: 23199465.8
(22) Date of filing: 25.09.2023
(51) Int. Cl.: H02G 3/04, H02G 3/00, H02G 3/34

(54) **CABLE DUCT SYSTEM**

(71) Applicant: Castioni Kabelführungssysteme GmbH, 5642 Mühlau Aargau (CH)
(72) Inventor: Castioni, Mario, 5642 Mühlau (CH)
(74) Representative: Burnett, Christopher James

(57) **Abstract**

A snap-fit cable duct system comprising a connection plate (100) comprising a base (110), first and second side walls extending (120,130) along the side edges of the base. The first side wall (120) comprises a first resilient engagement member (170). The system further comprises a trough (300) which is connectable to the connection plate (100), The trough (300) comprises a base (310) with first and second side walls (320,330) extending from the side edges of the base (310). The trough (300) is dimensioned to sit within an area defined by the base (110) and side walls (120,130) of the connection plate (100) when connected. The first resilient engagement member (120) is deformable to permit passage of a first abutment surface (360a) of the trough (300) when the trough (300) is lowered into the connection plate (100) to connect the trough (300) to the connection plate (100).

## Description

This invention is a cable duct system, and in particular a snap fit cable duct system.

Cable duct systems are used for a range of purposes, in particular for conveying cables long distances alongside railways and roads. Such cable duct systems may be modular systems comprising trough for holding the cables and combinations of posts, brackets and other attachments for securing the troughs to a surface. In use, such cable ducts will need to convey cables over a range of different terrains such as across open ground, which may be uneven and undulating, inside bridges and alongside viaducts, and be disposed both overground and underground. Cable duct systems therefore need to be versatile so that they can be installed in a range of environments.

Prior art cable ducts systems may therefore comprise a series of connection plates which in turn may be connected to spaced sigma posts driven into the ground or brackets attached to solid surfaces such as the walls of a tunnel, bridges and on tracks or floors and the like. A series of troughs will be supported by the connection plates to provide a cable duct into which the cables to be conveyed can be placed. The troughs are normally bolted to the connection plates which is time consuming and makes it difficult to adjust the positions of the troughs. An alternative system was then introduced whereby troughs were slidably mounted in the connection plates which saved time compared to using bolts. These connection plates have curved walls and the troughs have correspondingly curved walls so that they can slot within the wall of the connection plate but cannot be lifted out.

Prior art cable duct systems incorporating the slidably mounted trough still suffer several significant disadvantages. In particular, it is sometimes difficult to slide the troughs into the connection plates, at least partly because clearance is required to place and then slidably insert the trough into the connection plate. The troughs must be inserted at the correct angle otherwise they will not slide in. This can be particularly difficult in certain places such as bridges or where movement is limited and there is less room with which to work.

As such, the time taken to slide the troughs into the connection plate can still be significant and there may be a lot of bending required for the installation team which can create a workplace safety hazard. It should be appreciated that running a cable duct system along a railway line involves significant distances and so any inefficiency in the time spent installing each trough, when multiplied out over hundreds of kilometres, can be very significant.

The present invention seeks to solve the problem of the time taken to install cable duct systems and to alleviate potential workplace safety hazards. Therefore, according to the present invention there is provided a snap fit cable duct system comprising: a connection plate, the connection plate comprising: a base comprising opposed side edges; first and second side walls extending respectively at least partially along the side edges of the base, the first wall comprising a first resilient engagement member; a trough for conveying cables in use, the trough being connectable to the connection plate, the trough comprising: a trough base comprising opposed side edges; first and second side walls extending respectively from the side edges of the trough base, the trough base and first and second side walls defining an area to convey cables in use, the trough being dimensioned to sit within an area defined by the base and side walls of the connection plate when connected, so that the bases and side walls of the trough and connection plate are adjacent, the first side wall of the trough comprising an abutment surface; wherein the first resilient engagement member is deformable to permit passage of the first abutment surface of the trough when the trough is lowered into the connection plate to connect the trough to the connection plate, the first resilient engagement member preventing the trough being raised out of the connection plate by engaging with the abutment surface.

The first and second side walls of the connection plate extend respectively at least partially along the side edges of the base. Connection plates come in all shapes and sizes and may either support the middle of a trough or may support the ends of adjacent troughs. Since the cable duct system may follow ground that is undulating or have to change in direction to get round obstructions, the connection plates may contain swivel heads or hinges, or may include bends to account for horizontal or vertical changes of direction where required.

Therefore, each side edge of the connection plate may contain two or more side walls so that two different troughs can be accommodated end-to-end on one connection plate. Alternatively, the or each side wall may comprise two or more resilient engagement members.

The present invention addresses the problems of prior art cable duct systems because it permits a snap-fit of the trough into the connection plate from above which means that clearance either end of the connection plate is not required and overall, there is a significant time saving for connecting each trough or troughs to each connection plate. A user simply has to push the trough between the side wall of the connection plate to slide the abutment surface past the first resilient engagement member to retain the trough within the connection plate. The first resilient engagement member then ensures that the trough cannot be lifted out. However, the trough may be slidable within the connection plate therefore it will be possible to either remove a trough by sliding it out or at the very least position the trough to a suitable position within the connection plate. In some embodiments the resilient engagement member may be removable so that the trough can be lifted out.

The second side wall of the trough may comprise a second abutment surface so that the second side wall of the connection plate engages with the second abutment surface when the trough and connection plate are connected. If the trough is provided with an abutment surface on both side walls and the second side wall of the connection plate also engages with the trough, then the trough will be more securely held by the connection plate.

The second side wall of the connection plate may be curved to engage with a second abutment surface, or the second side wall may comprise a second resilient engagement member. If the second side wall of the connection plate is curved, such as with prior art connection plates, rather than providing a surface in which the trough is slid into the connection plate, the second side wall can provide a surface about which the trough can pivot into the connection plate as the first abutment surface passes the first resilient engagement member. Alternatively, the second side wall may comprise a second resilient engagement member such as that of the first side wall of the connection plate. This could provide for a snap-fit on both sides of the trough and connection plate.

The first resilient engagement member may comprise a strip of resilient material attached at one end to an inside surface of the first wall of the connection plate, the strip at the other end being bent away from the surface of the first wall and extending towards the base at an acute angle relative to the wall. The engagement member may be bolted, welded, or otherwise adhered to the inside surface of the first wall of the connection plate and could be made from a resilient material such as steel or alternatively a plastics material. The first resilient engagement member needs to extend away from the wall only sufficiently for the abutment surface to deform the resilient member as the trough is lowered into the connection plate whereby the engagement member then returns to its original position to retain the trough within the connection plate.

Alternative constructions and configurations of the first resilient engagement member could include a strip that has a second end extending upwardly from a first end connected to the plate, but which is bent back at an acute angle to point down towards the base of the connection plate. In an alternative embodiment a tongue could be cut into the side wall of the connection plate which is then bent into the area defined by the side walls and base of the connection plate. The advantage of providing a separate strip connected to the inside wall is the ease and cost of manufacture and can also be removable.

Alternatively, the side walls of the connection plate could have a shape that mirrors the profile of the trough side walls, the side walls of the connection plate being resilient so that they can deform away when the trough is inserted then snap back to retain the trough.

The first side wall of the connection plate may extend at an obtuse angle away from the base. This will provide extra clearance for the trough to pass into the connection plate past the first resilient engagement member.

The first and second side walls of the trough may comprise a curve to provide the abutment surface. The first and second side walls of the trough may be hollow and define a vertical inner wall and curved outer wall, the curved outer wall comprising a kink to provide the abutment surface. Such troughs are currently used to slide into prior art connection plates and are industry standard The cable duct system may further comprise a lid attachable to the first and second side walls of the trough and may further comprise a sigma post or bracket attachable to the connection plate. The cable duct system may comprise pluralities of the connection plate, trough, lid, sigma post and/or bracket.

So that it may be better understood, embodiments of the present invention will now be described in detail, but by way of example only wherein:
Figure 1 shows a prior art connection plate;
Figure 2 shows a prior art trough;
Figure 3 shows a side view of a connection plate according to the present invention;
Figure 4 shows a perspective view of a connection plate according to the present invention;
Figure 5 shows a connection plate connected to a trough according to the present invention;
Figure 6 shows a connection plate and trough connected to a sigma post;
Figure 7 shows an example of a cable duct system according to the present invention in use;
Figure 8 shows a plan view of an alternative connection plate;
Figure 9 shows a side view of the connection plate of Figure 8;
Figure 10 shows a plan view of an alternative connection plate;
Figure 11 shows a side view of the connection plate of Figure 10;
Figure 12 shows an end view of an alternative connection plate;
Figure 13 shows a perspective view of the connection plate of Figure 12;
Figure 14 shows an end view of an alternative connection plate; and
Figure 15 shows a perspective view of the connection plate of Figure 14.

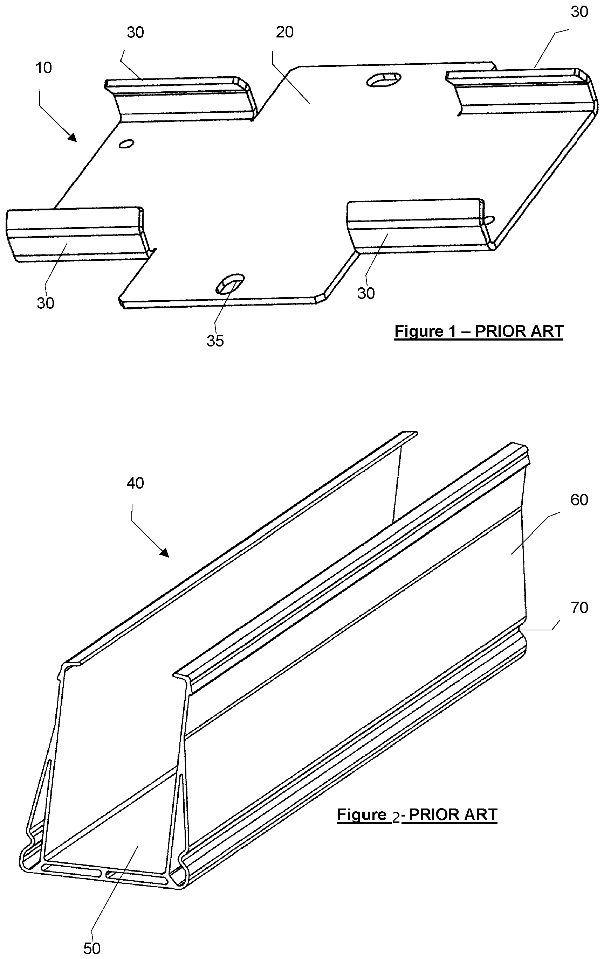

Figure 1 shows an example of a prior art connection plate generally indicated 10, comprising base 20 and raised curved side walls 30. This particular connection plate comprises apertures 35 for fixation of the plate to the floor. Figure 2 shows a prior art trough generally indicated 40 comprising base 50 and curved outer walls 60 which comprise kinks 70. The trough 40 and connection plate 10 are dimensioned for slidable engagement of the trough 40 into the connection plate 10.

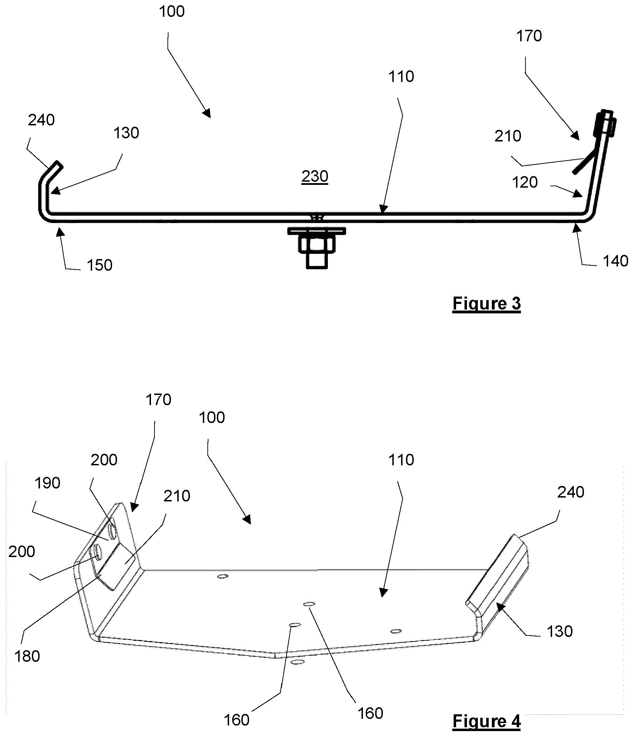

With reference now to Figure 3 there is shown a cable duct system according to the present invention comprising a connection plate generally indicated 100 comprising a base generally indicated 110 and first and second side walls generally indicated 120 and 130 which extend from side edges generally indicated 140 and 150 of the base 110. In Figure 3 the base 110 is generally planar though in alternative embodiments could be U shaped or V shaped depending upon the application of the cable duct system. As more clearly shown in Figure 4, the base 110 comprises a series of apertures 160 for attachment of the connection plate 100 to a bracket or sigma post as will be described in more detail later.

Attached to the first side wall 120 of the connection plate 100 is a first resilient engagement member generally indicated 170. The first resilient engagement member 170 comprises a resilient strip 180 which comprises a first end 190 that is secured to the inside of the first side wall 120 with bolts 200 and a second end 210 which is bent away from the inside surface of the first side wall 120 and extends into an area 230 defined by the first and second side walls 120, 130 and the base 110. The strip 180 extends at an acute angle relative to the first wall 120. As more clearly shown in Figure 3, the first side wall 120 of the connection plate 100 is at an obtuse angle relative to the base 110.

As shown in Figures 3 and 4, the second side wall 130 comprises a curved section 240 which extends into the area 230.

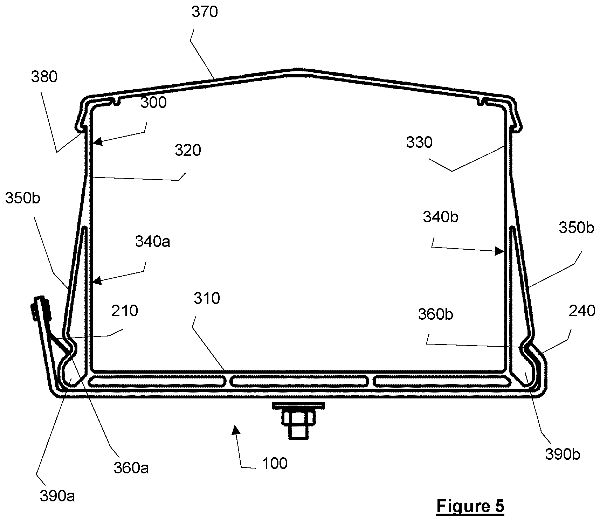

Figure 5 shows a connection plate 100 connected to a trough generally indicated 300 which is similar to prior art trough 20 as shown in Figure 2. Trough 300 comprises a double walled base 310 and first and second side walls 320, 330. Curved walls 320 and 330 are double walled and comprise a vertical section generally indicated 340a, 340b and outwardly extending curved section 350a,350b. The curved outer section 350a, 350b respectively comprise a kink 360a, 360b. The trough 300 further comprises a lid 370 which incorporates a lip 380 for a snap-fit onto the side walls 320 and 330 of the trough.

To connect the trough 300 into the connection plate 100 a user may place the side wall 330 so that the lower part of curved section 350b, generally indicated 390b, slots within the curved second side wall 130 of connection plate 110 so that the curved section 240 of the side wall 130 sits within the kink 360b. The side wall 320 of the trough 300 can then be lowered into the connection plate 110 so that the lower part of curved section 350a, generally indicated 390a, must pass and deform the first resilient engagement member 170 and in particular the lower section 210. A small amount of force is required to push the trough past the first resilient engagement member 170. The lower section 210 returns to its original position and as is shown in Figure 5 engages with the kink 360a of the curved outer wall 350a. The trough is unable to be raised up out of the connection plate because of the engagement of the first resilient engagement member 170 with the kink 360a which does not permit flexing of the lower part 210 in that direction. The only way to now remove the trough 300 from the connection plate 110 is to slide it out.

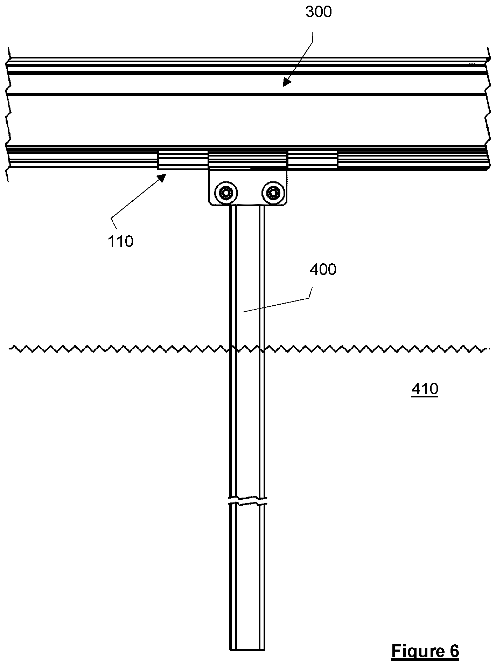

Figure 6 shows the use of the present invention where the connection plate 110 and trough 300 are connected and the connection plate 110 is attached to a sigma post 400 which has been inserted into the ground 410.

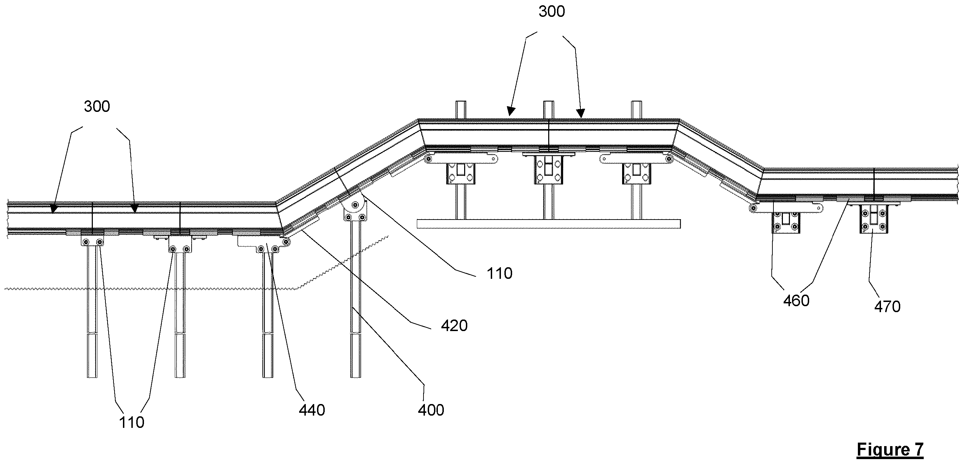

Figure 7 shows a series of troughs 300 connected to various connection plates as part of a larger cable duct system. Connection plate 110 is connected to trough 300 for the first two sections of the system. An alternative connection plate 420 comprises a hinge so that the cable duct system is able to go uphill. The connection plate 420 comprises two sets of opposed side walls as previously described and furthermore a hinged section 440. The following connection plate 110 is attached to a swivelled connector which is connected to the sigma post 400. Alternative connection plates 460 are attached to wall mounted brackets 470.

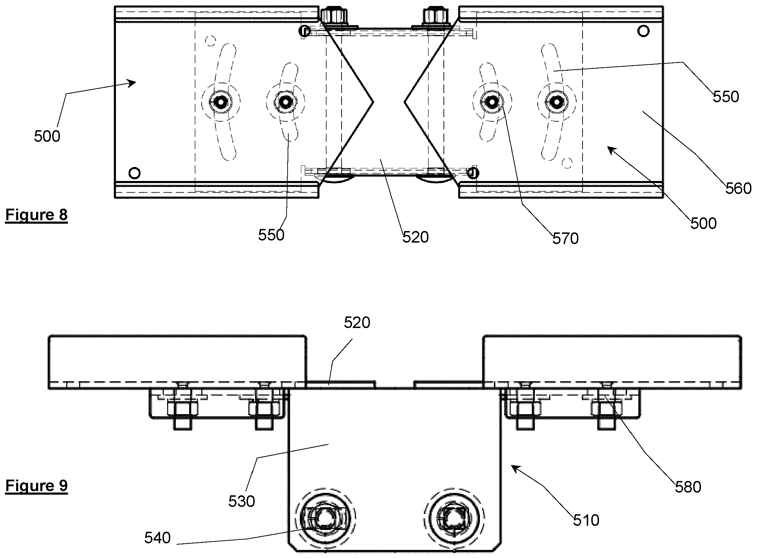

Figures 8 and 9 show an embodiment of single plane swivel bracket where two connection plates generally indicated 500 are attached to a sigma post bracket generally indicated 510. The sigma post bracket 510 comprises a base 520 and side extensions 530 through which bolts 540 extend for connection to a sigma post. Base 520 of the sigma post bracket 510 comprises curved apertures 550. The connection plates 500 comprise planar bases 560 and apertures 570. The connection plates 500 are secured to the base 520 of the sigma post bracket 510 with rivets 580 which extend up through the curved apertures 550 of the base of the sigma post bracket and are secured to the base 560 of the connection plates 500 by a radial riveting process, so that the top of the rivets 580 are flush with the base 560. This allows for smooth passages of a trough into the connection plate. The connection plates 500 can then swivel with respect to the sigma post bracket 510 by passage of the rivets 580 within the curved aperture 550.

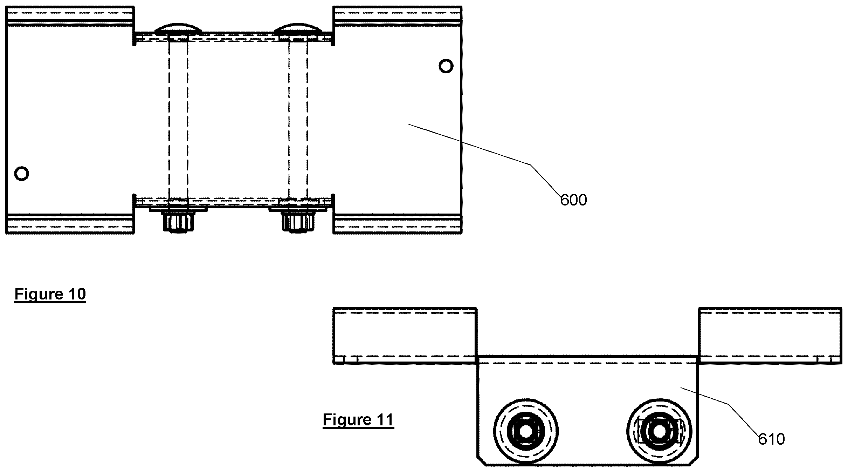

Figures 10 and 11 show an alternative straight connection plate 600 which comprises extensions 610 for connection of the connection plate 600 to a sigma post.

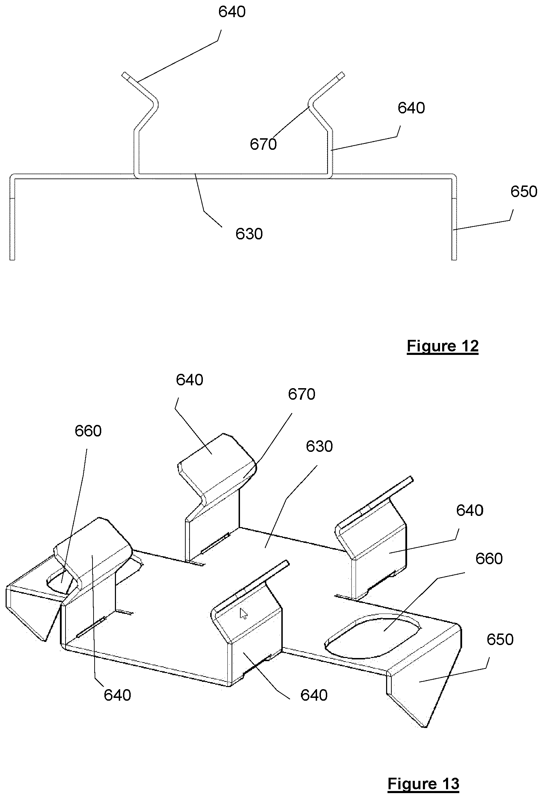

Figures 12 and 13 show an alternative connection plate 620 for fixing the cable duct system to soft ground. The connection plate 620 comprises a base 630, and opposed side walls 640 in the form of clips. The base 630 extends between the clips 640 on each side and folds down into spikes 650 that can be pushed into the soft ground to hold the connection plate 620 in position. Apertures 660 are provided in the extended base sections so that so that piles can be driven through the apertures 660 to secure the connection late 620. The side walls 640 each comprise a kink 670 which engages with a corresponding abutment on a trough when connected, as previously described. The side walls 640 therefore comprise a resilient engagement member.

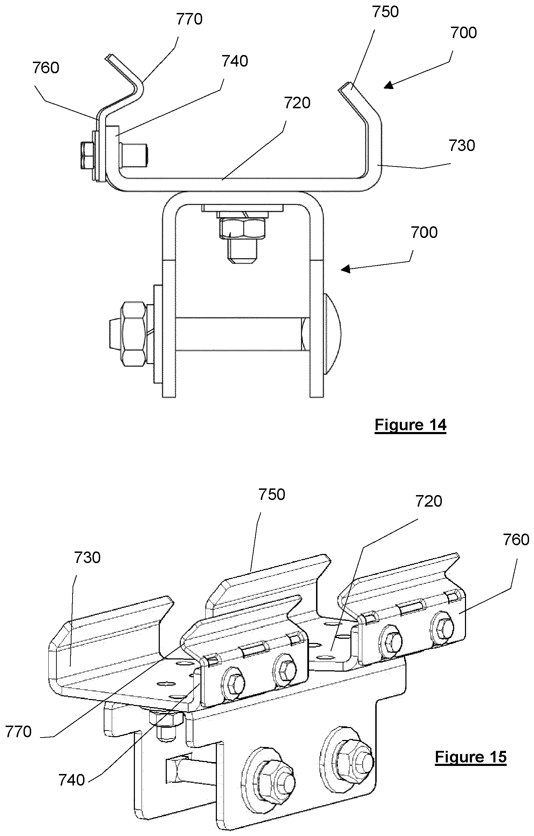

Figures 14 and 15 show a further embodiment of connection plate, generally indicted 700, attached to a single plane swivel bracket, generally indicated 710, as previously described. Each connection plate 700 comprises a base 720, a curved wall 730 and a straight wall 740. Curved wall 730 comprises an inwardly-disposed lip 750 to receive and engage with a corresponding profile on a trough, for example as shown in Figure 5. Straight wall 740 comprises a resilient engagement member 760 which is bolted to the straight wall 740. Resilient engagement member 760 comprises a kink 770 which enables a snap fit with the trough. The resilient engagement member 760 is releasable from the straight wall so that the trough can be removed.

## Claims

1. A snap fit cable duct system comprising:
a connection plate (100), the connection plate (100) comprising:
a base (110) comprising opposed side edges (140,150);
first and second side walls (120,130) extending respectively at least partially along the side edges (140,150) of the base (110), the first wall (120) comprising a first resilient engagement member (170);
a trough (300) for conveying cables in use, the trough (300) being connectable to the connection plate (100), the trough comprising (300):
a trough base (310) comprising opposed side edges;
first and second side walls (320,330) extending respectively from the side edges of the trough base (310), the trough base (310) and first and second side walls (320,330) defining an area to convey cables in use, the trough (300) being dimensioned to sit within an area defined by the base (110) and side walls (120,130) of the connection plate (100) when connected, so that the bases (110,310) and side walls (120,130,320,330) of the trough (300) and connection plate (100) are adjacent, the first side
wall (320) of the trough (300) comprising an abutment surface (360a); **characterised in that** the first resilient engagement member (210) is deformable to permit passage of the first abutment surface (360a) of the trough (300) when the trough (300) is lowered into the connection plate (100) to connect the trough (300) to the connection plate, the first resilient engagement member (170) preventing the trough (300) being raised out of the connection plate (100) by engaging with the abutment surface.

2. A cable duct system as claimed in claim 1, wherein the second side wall (330) of the trough (300) comprises a second abutment surface and the second side wall (130) of the connection plate (100) engages with the second abutment surface when the trough (300) and connection plate (100) are connected.

3. A cable duct system as claimed in claim 2, wherein the second side wall (130) of the connection plate (100) is curved to engage with the second abutment surface or wherein the second side wall (130) comprises a second resilient engagement member.

4. A cable duct system as claimed in any preceding claim, wherein the first resilient engagement member (170) comprises a strip of resilient material attached at one end (190) to an inside surface of the first wall (120) of the connection plate (100), the strip at the other end (210) being bent away from the first wall (120) surface and extending towards the base (110) at an acute angle relative to the wall (120).

5. A cable duct system as claimed in any preceding claim, wherein the first side wall (120) of the connection plate (100) extends at an obtuse angle away from the base (110).

6. A cable duct system as claimed in any preceding claim wherein at least one side wall (120,130) of the connection plate (100) is resilient to permit passage of the first abutment surface, the first resilient engagement member (170) corresponding to the shape of the abutment surface of the trough (300).

7. A cable duct system as claimed in any preceding claim, wherein the first and second side walls (320,330) of the trough (300) comprise a curve to provide the abutment surface.

8. A cable duct system as claimed in any preceding claim, where the first and second side walls (320,330) of the trough (300) are hollow and define a vertical inner wall (240a,340b) and curved outer wall (350a,350b), the outer wall (350a,350b) comprising a kink (360a,360b) to provide the abutment surface.

9. A cable duct system as claimed in any preceding claim, wherein the trough (300) is slidable within the connection plate (100).
